# EUROPEAN PATENT APPLICATION

(11) **EP 4 506 896 A1**
(43) Date of publication of application: **12.02.2025**
(21) Application number: 24184807.6
(22) Date of filing: 26.06.2024
(51) Int. Cl.: G06T 7/90, G06T 9/00, H04N 19/00, H04N 19/186, H04N 19/85, G06F 16/51, H03M 7/30, H04N 1/64, H03M 7/00, H03M 7/40

(54) **MULTI-LEVEL COMPRESSION METHOD FOR PICTURE DATA, COMPUTER DEVICE, AND STORAGE MEDIUM**

(30) Priority: 08.08.2023 CN 202310992669
(71) Applicant: Shenzhen Woody Vapes Technology Co., Ltd., Shenzhen, Guangdong 518000 (CN)
(72) Inventor: TIAN, Yalei, Shenzhen, 518000 (CN); GONG, Wenbo, Shenzhen, 518000 (CN)
(74) Representative: Hamer, Christopher K.

(57) **Abstract**

A multi-level compression method for picture data includes: obtaining original data by performing modulo operation on a picture to-be-compressed; obtaining a first storage amount and a second storage amount by respectively storing the original data in a first container and a second container and calculating a size of data in the first container and a size of data in the second container; determining a bit length of index data, and constructing a color table and an initial index table; obtaining a target color table by identifying a minimum value in the color table and subtracting the minimum value from each data in the color table; obtaining a first compressed index table by compressing the initial index table according to the bit length; and obtaining a second compressed index table by identifying a locator in the first compressed index table and compressing the first compressed index table according to the locator.

## Description

### TECHNICAL FIELD

This application relates to the field of picture data compression, and particularly to a multi-level compression method for picture data, a computer device, and a storage medium.

### BACKGROUND

In embedded systems with limited resources, many systems having a display, such as an organic light-emitting diode (OLED) display and a thin-film transistor (TFT) display, need to display a lot of pictures. These pictures are generally stored in a flash memory of a chip or an external memory chip. If these pictures are stored in a raw form (uncompressed), a large amount of flash space on the chip will be occupied, and even a larger-capacity memory chip will need to be used, which increases hardware cost and hardware size of the system.

The existing compression algorithms generally consume a large amount of random-access memory (RAM) when decoding or there is a certain data loss after compression. On the one hand, the RAM is very valuable for tiny embedded systems and may not be enough to support these algorithms. On the other hand, if data loss occurs, display of a display screen will have certain defects. Therefore, a compression method for picture data is urgently needed to avoid data loss and improve accuracy of picture data compression.

### SUMMARY

Embodiments of the disclosure provide a multi-level compression method for picture data. The multi-level compression method for picture data performed by a server and includes: obtaining original data by obtaining a picture to-be-compressed and performing modulo operation on the picture to-be-compressed; obtaining a first storage amount by storing the original data in a first container and calculating a size of data in the first container, and obtaining a second storage amount by storing the original data in a second container and calculating a size of data in the second container; determining a bit length of index data according to the first storage amount and the second storage amount, and constructing a color table and an initial index table; obtaining a target color table by identifying a minimum value in the color table and subtracting the minimum value from each data in the color table for compression of the color table; obtaining a first compressed index table by performing compression on the initial index table according to the bit length of the index data; and obtaining a second compressed index table by identifying a locator in the first compressed index table and performing compression on the first compressed index table according to the locator.

Embodiments of the disclosure provide a computer device. The computer device includes a processor and a memory. The memory is coupled with the processor and stores computer programs. The computer programs, when executed by the processor, are operable to execute the above multi-level compression method for picture data.

Embodiments of the disclosure provide a non-transitory computer-readable storage medium. The non-transitory computer-readable storage medium stores computer programs which, when executed by a processor, cause the processor to execute the above multi-level compression method for picture data.

### BRIEF DESCRIPTION OF THE DRAWINGS

In order to describe technical solutions of the disclosure more clearly, the following will give a brief description of accompanying drawings used for describing embodiments of the disclosure. Apparently, accompanying drawings described below are merely some embodiments of the disclosure. Those of ordinary skill in the art can also obtain other accompanying drawings based on the accompanying drawings described below without creative efforts.
FIG. 1 is an implementation flowchart illustrating a multi-level compression method for picture data provided in embodiments of the disclosure.
FIG. 2 is an implementation flowchart illustrating a sub-process in the multi-level compression method for picture data provided in embodiments of the disclosure.
FIG. 3 is an implementation flowchart illustrating a sub-process in the multi-level compression method for picture data provided in other embodiments of the disclosure.
FIG. 4 is an implementation flowchart illustrating a sub-process in the multi-level compression method for picture data provided in other embodiments of the disclosure.
FIG. 5 is an implementation flowchart illustrating a sub-process in the multi-level compression method for picture data provided in other embodiments of the disclosure.
FIG. 6 is an implementation flowchart illustrating a sub-process in the multi-level compression method for picture data provided in other embodiments of the disclosure.
FIG. 7 is an implementation flowchart illustrating a sub-process in the multi-level compression method for picture data provided in other embodiments of the disclosure.
FIG. 8 is a schematic diagram illustrating data arrangement of a first compressed index table provided in embodiments of the disclosure.
FIG. 9 is a schematic diagram illustrating data arrangement of a second compressed index table provided in embodiments of the disclosure.
FIG. 10 is a schematic diagram illustrating a multi-level compression apparatus for picture data provided in embodiments of the disclosure.
FIG. 11 is a schematic diagram illustrating a computer device provided in embodiments of the disclosure.

### DETAILED DESCRIPTION

Unless otherwise defined, all technical and scientific terms herein have the same meaning as commonly understood by one of ordinary skill in the technical field to which the disclosure belongs. The terms used in the specification of the disclosure are merely for the purpose of describing implementations of the disclosure, which are not intended to limit the disclosure. The terms "include", "comprise", and "have" as well as variations thereof used in the specification, the claims, and the accompany drawings of the disclosure are intended to cover non-exclusive inclusion. The terms "first", "second", and the like used in the specification, the claims, and the accompany drawings of the disclosure are used to distinguish different objects, rather than describe a particular order.

The term "embodiment" referred to herein means that particular features, structures, or properties described in conjunction with the embodiments may be defined in at least one embodiment of the disclosure. The phrase "embodiment" appearing in various places in the specification does not necessarily refer to the same embodiment or an independent/ alternative embodiment that is mutually exclusive with other embodiments. Those skilled in the art will understand expressly and implicitly that an embodiment described herein may be combined with other embodiments.

In order for those skilled in the art to better understand technical solutions of embodiments of the disclosure, the technical solutions will be depicted clearly and completely with reference to accompanying drawings.

The disclosure will be depicted in detail below with reference to accompanying drawings and embodiments.

Embodiments of the disclosure provide a multi-level compression method and apparatus for picture data, a device, and a storage medium, which can avoid data loss and improve accuracy of picture data compression.

Embodiments of the disclosure provide a multi-level compression method for picture data. The multi-level compression method for picture data performed by a server and includes: obtaining original data by obtaining a picture to-be-compressed and performing modulo operation on the picture to-be-compressed; obtaining a first storage amount by storing the original data in a first container and calculating a size of data in the first container, and obtaining a second storage amount by storing the original data in a second container and calculating a size of data in the second container; determining a bit length of index data according to the first storage amount and the second storage amount, and constructing a color table and an initial index table; obtaining a target color table by identifying a minimum value in the color table and subtracting the minimum value from each data in the color table for compression of the color table; obtaining a first compressed index table by performing compression on the initial index table according to the bit length of the index data; and obtaining a second compressed index table by identifying a locator in the first compressed index table and performing compression on the first compressed index table according to the locator.

Embodiments of the disclosure provide a multi-level compression apparatus for picture data. The multi-level compression apparatus for picture data includes an original-data obtaining unit, an original-data storage unit, an initial-index-table construction unit, a color-table compression unit, an initial index-table compression unit, and a secondary index-table compression unit. The original-data obtaining unit is configured to obtain original data by obtaining a picture to-be-compressed and performing modulo operation on the picture to-be-compressed. The original-data storage unit is configured to obtain a first storage amount by storing the original data in a first container and calculating a size of data in the first container, and obtain a second storage amount by storing the original data in a second container and calculating a size of data in the second container. The initial-index-table construction unit is configured to determine a bit length of index data according to the first storage amount and the second storage amount, and construct a color table and an initial index table. The color-table compression unit is configured to obtain a target color table by identifying a minimum value in the color table and subtracting the minimum value from each data in the color table for compression of the color table. The initial index-table compression unit is configured to obtain a first compressed index table by performing compression on the initial index table according to the bit length of the index data. The secondary index-table compression unit is configured to obtain a second compressed index table by identifying a locator in the first compressed index table and performing compression on the first compressed index table according to the locator.

Embodiments of the disclosure provide a computer device. The computer device includes a processor and a memory. The memory is coupled with the processor and stores computer programs. The computer programs, when executed by the processor, are operable to execute the above multi-level compression method for picture data.

Embodiments of the disclosure provide a non-transitory computer-readable storage medium. The non-transitory computer-readable storage medium stores computer programs which, when executed by a processor, cause the processor to execute the above multi-level compression method for picture data.

Embodiments of the disclosure provide a multi-level compression method and apparatus for picture data, a device, and a storage medium. The method includes: obtaining original data by obtaining a picture to-be-compressed and performing modulo operation on the picture to-be-compressed; obtaining a first storage amount by storing the original data in a first container and calculating a size of data in the first container, and obtaining a second storage amount by storing the original data in a second container and calculating a size of data in the second container; determining a bit length of index data according to the first storage amount and the second storage amount, and constructing a color table and an initial index table; obtaining a target color table by identifying a minimum value in the color table and subtracting the minimum value from each data in the color table for compression of the color table; obtaining a first compressed index table by performing compression on the initial index table according to the bit length of the index data; and obtaining a second compressed index table by identifying a locator in the first compressed index table and performing compression on the first compressed index table according to the locator. In embodiments of the disclosure, picture data is stored in two containers respectively, the bit length of the index data is determined, the color table is compressed, and the index table is compressed twice, which can avoid data loss during picture compression, thereby achieving lossless compression of picture data and improving accuracy of picture data compression.

It is to be noted that, a multi-level compression method for picture data provided in embodiments of the disclosure is generally executed by a server. Accordingly, a multi-level compression apparatus for picture data is generally configured in a server.

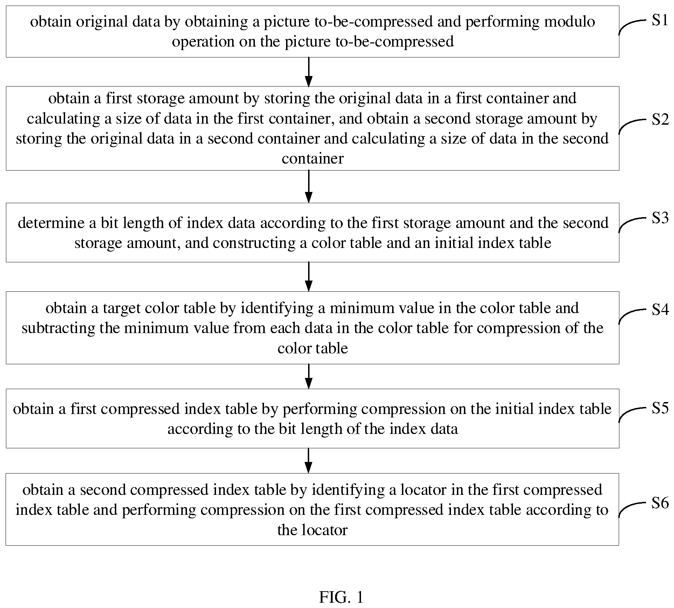

Referring to FIG. 1, FIG. 1 illustrates a specific implementation of a multi-level compression method for picture data.

It is to be noted that, the method of the disclosure is not limited to an execution order illustrated in FIG. 1, as long as substantially the same results can be obtained. The method includes the following.

S1, obtain original data by obtaining a picture to-be-compressed and performing modulo operation on the picture to-be-compressed.

Specifically, embedded systems with limited resources and a display (e.g., an organic light-emitting diode (OLED) display and a thin-film transistor (TFT) display) need to display a lot of pictures, so picture data needs to be compressed in these systems to avoid data storage taking up too much space. In embodiments of the disclosure, the original data is obtained by obtaining the picture to-be-compressed and performing modulo operation on the picture to-be-compressed.

S2, obtain a first storage amount by storing the original data in a first container and calculating a size of data in the first container, and obtain a second storage amount by storing the original data in a second container and calculating a size of data in the second container.

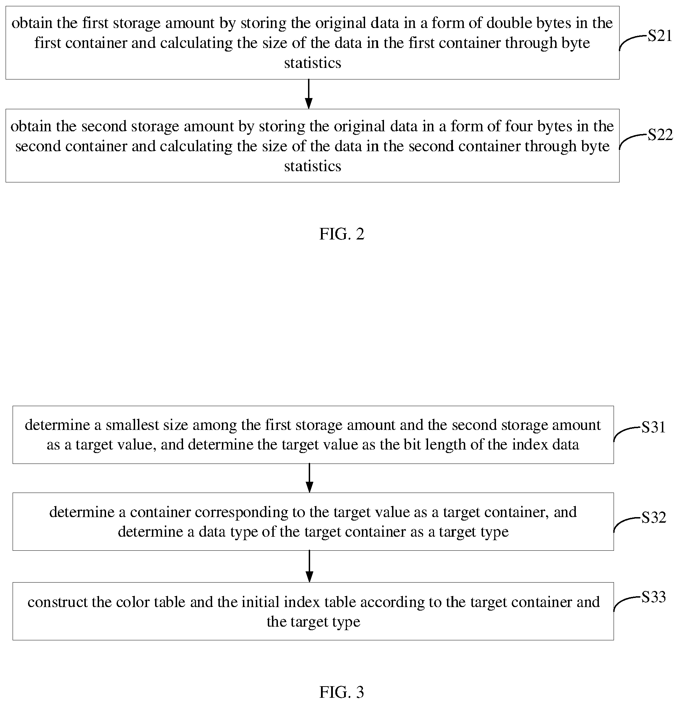

Referring to FIG. 2, FIG. 2 illustrates a specific implementation of the operation at S2, as detailed below.

S21, obtain the first storage amount by storing the original data in a form of double bytes in the first container and calculating the size of the data in the first container through byte statistics.

S22, obtain the second storage amount by storing the original data in a form of four bytes in the second container and calculating the size of the data in the second container through byte statistics.

Specifically, the original data is stored in the form of double bytes in first container *set1*, and the size *size1* of data in said container is calculated in bytes, to obtain the first storage amount. The original data is stored in the form of four bytes in second container *set2,* and the size *size2* of data in said container is calculated in bytes, to obtain the second storage amount. The container *set* herein is a container in the C++ standard library, and has characteristics of automatic deduplication and automatic ascending sorting.

It is to be noted that, during storage of the original data, the data order of the original data cannot be disrupted.

S3, determine a bit length of index data according to the first storage amount and the second storage amount, and construct a color table and an initial index table.

Referring to FIG. 3, FIG. 3 illustrates a specific implementation of the operation at S3, as detailed below.

S31, determine a smallest size among the first storage amount and the second storage amount as a target value, and determine the target value as the bit length of the index data.

S32, determine a container corresponding to the target value as a target container, and determine a data type of the target container as a target type.

S33, construct the color table and the initial index table according to the target container and the target type.

Specifically, first storage amount *size1* and second storage amount *size2* are compared, to determine the smallest size as the target value and determine the target value as the bit length of the index data. Also, a container corresponding to the target value is determined as the target container, where the target container *set* has a data type *T.* Finally, the color table and the initial index table are constructed according to the target container and the target type.

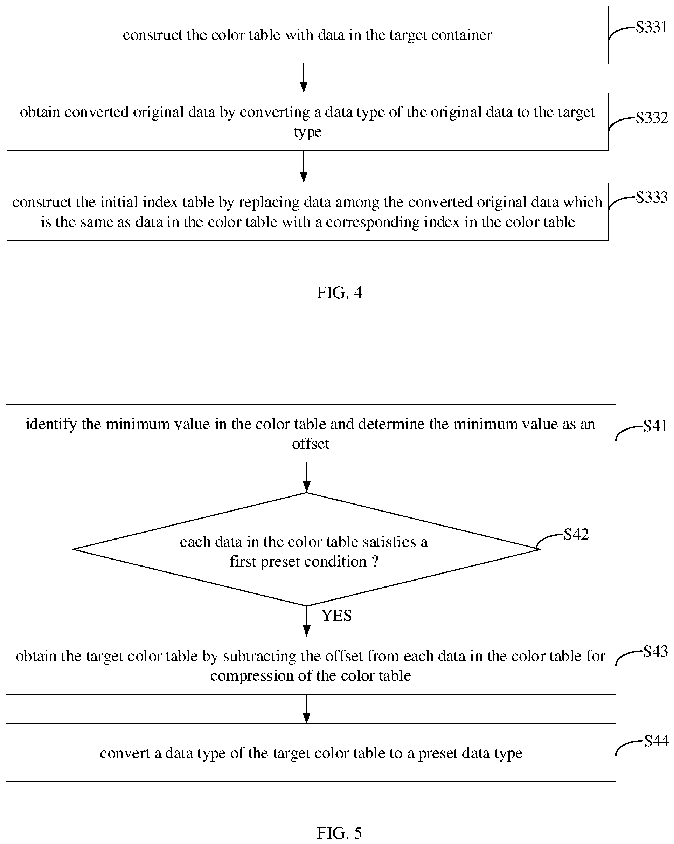

Referring to FIG. 4, FIG. 4 illustrates a specific implementation of the operation at S33, as detailed below.

S331, construct the color table with data in the target container.

S332, obtain converted original data by converting a data type of the original data to the target type.

S333, construct the initial index table by replacing data among the converted original data which is the same as data in the color table with a corresponding index in the color table.

Specifically, the data in the target container is used as the color table, that is, color table *color_table* is constructed with the data in the target container. The data type of the original data is converted to the target type, and the target type is the same as the data type of the target container, both are data type *T*, data type *T* contains *_t,* and *_t* indicates that a data type is defined through *typedef.* Then, the converted original data is compared with data in the color table. If they are the same, replace the converted original data with a corresponding index in the color table, and store the index in an index table *color_index,* to construct the initial index table.

S4, obtain a target color table by identifying a minimum value in the color table and subtracting the minimum value from each data in the color table for compression of the color table.

Specifically, the minimum value in the color table is identified as the offset, and the offset (i.e., the minimum value) is subtracted from all data in the color table, to compress the color table and obtain the target color table.

Referring to FIG. 5, FIG. 5 illustrates a specific implementation of the operation at S4, as detailed below.

S41, identify the minimum value in the color table and determine the minimum value as an offset.

S42, determine whether each data in the color table satisfies a first preset condition.

S43, in response to the first preset condition being satisfied, obtain the target color table by subtracting the offset from each data in the color table for compression of the color table.

S44, convert a data type of the target color table to a preset data type.

Specifically, the minimum value in the color table is determined as the offset, and whether each data in the color table satisfies the first preset condition is determined, that is, whether each data in the color table can be defined in a smaller data type *Ty* is determined. If each data in the color table can be defined in the smaller data type *Ty* (i.e., the first preset condition is satisfied), the offset is subtracted from each data in the color table for compression of the color table to obtain the target color table, and the data type of the target color table is converted to the preset data type. Conversely, if each data in the color table cannot be defined in the smaller data type *Ty* (i.e., the first preset condition is not satisfied), data in the color table remains unchanged, and the offset is set to zero.

In a specific embodiment, if the color table is *const uint16_t table[]* = *{0xFF00,0xFFA0,0xFFA2,0xFFB5,0xFFC5,0xFFC6,0xFFFF}*, after transformation, the offset bit *color_off_value* = *0xFF00*, and the target color table is *const uint8_t table[]= {0x00,0xA0,0xA2,0xB5,0xC5,0xC6,0xFF}*.

S5, obtain a first compressed index table by performing compression on the initial index table according to the bit length of the index data.

Specifically, the bit length of the index data is determined in the above operation. In embodiments of the disclosure, the initial index table is compressed according to the bit length of the index data to obtain the first compressed index table.

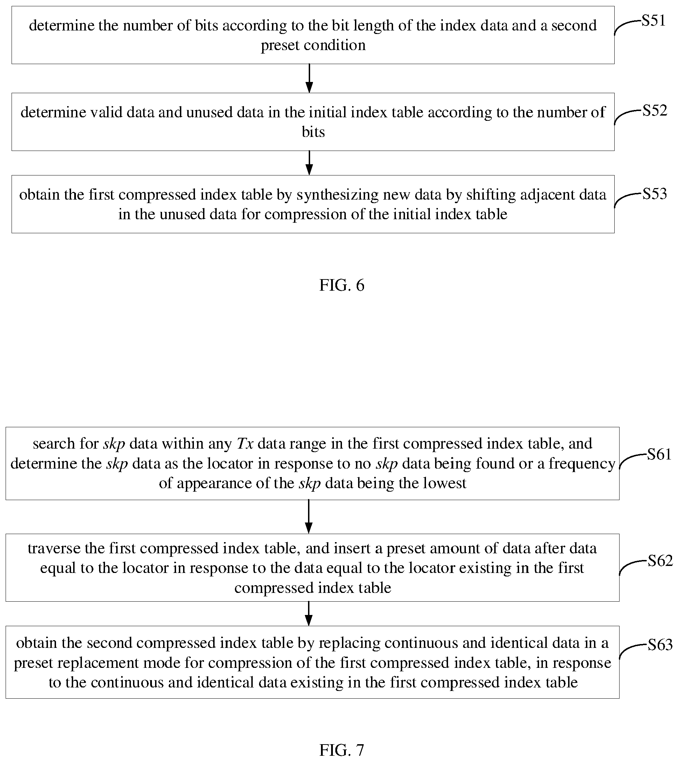

Referring to FIG. 6, FIG. 6 illustrates a specific implementation of the operation at S5, as detailed below.

S51, determine the number of bits according to the bit length of the index data and a second preset condition.

S52, determine valid data and unused data in the initial index table according to the number of bits.

S53, obtain the first compressed index table by synthesizing new data by shifting adjacent data in the unused data for compression of the initial index table.

Specifically, the second preset condition is 2" >= *size,* a minimum value of *n* that satisfies said condition is obtained, where *size* represents the bit length and *n* represents the number of bits. That is, each data in the initial index table c can be defined only with *n* bits. For convenience of decoding, the value of *n* is generally a multiple of 2. As an example, *size* = 7, the minimum value of *n* that satisfies said condition is 3, based on consideration of convenient decoding, *n* takes a value of 4. Only *n* bits of each data in the initial index table are valid, while remaining bits of each data are unused. New data is synthesized by performing shifting or other operations on adjacent data in the index table, to generate the first compressed index table *color_index1.*

In a specific embodiment, if *n* corresponding to the form of double byte is the smallest and *size* = 63, *n* = 6. The binary representation of the initial index table is shown in Table 1-1, where $ represents unused bits, and A~Z represent used bits and do not represent specific values:

**Table 1-1 data after processing is shown in Table 1-2:**

| | | | |
|---|---|---|---|
| $$$$$$$$$$AAAAAA | $$$$$$$$$$BBBBBB | $$$$$$$$$$CCCCCC | $$$$$$$$$$DDDDDD |
| $$$$$$$$$$EEEEEE | $$$$$$$$$$FFFFFF | $$$$$$$$$$GGGGGG | $$$$$$$$$$HHHHHH ...... |

**Table 1-2**

| | | |
|---|---|---|
| AAAAAABBBBBBCCCC | CCDDDDDDEEEEEEFF | FFFFGGGGGGHHHHHH ...... |

S6, obtain a second compressed index table by identifying a locator in the first compressed index table and performing compression on the first compressed index table according to the locator.

Specifically, after identifying the locator, the first compressed index table is compressed according to the locator, so that the picture data undergoes multi-level compression, thereby obtaining the second compressed index table.

Referring to FIG. 7, FIG. 7 illustrates a specific implementation of the operation at S6, as detailed below.

S61, search for *skp* data within any *Tx* data range in the first compressed index table, and determine the *skp* data as the locator in response to no *skp* data being found or a frequency of appearance of the *skp* data being the lowest.

S62, traverse the first compressed index table, and insert a preset amount of data after data equal to the locator in response to the data equal to the locator existing in the first compressed index table.

S63, obtain the second compressed index table by replacing continuous and identical data in a preset replacement mode for compression of the first compressed index table, in response to the continuous and identical data existing in the first compressed index table.

Specifically, search for *skp* data within any *Tx* data range in the first compressed index table. If no *skp* data is found or the frequency of the appearance of the *skp* data is the lowest, the *skp* data is determined as the locator. Then, the first compressed index table is traversed to query whether data equal to the locator exists in the first compressed index table. If the data equal to the locator exists in the first compressed index table, a preset amount of data is inserted after the data equal to the locator, where the preset amount is set according to actual situation and is not limited herein. If *N* continuous data in the first compressed index table are the same, the *N* continuous data are replaced to be in a form of *skp* + length *N* + one metadata, so as to replace continuous and identical data for compression of the first compressed index table to obtain the second compressed index table. Otherwise, if neither of the above two situations (i.e., no *skp* data is found and the frequency of the appearance of the *skp* data is the lowest) occurs, no processing is performed. *Tx* is a picture format. In Maya Arnold (*maketx*)*, .jpg, .png,* etc. can be converted into *.tx* format. The *SKP* data type is a dedicated file format for *SketchUp.*

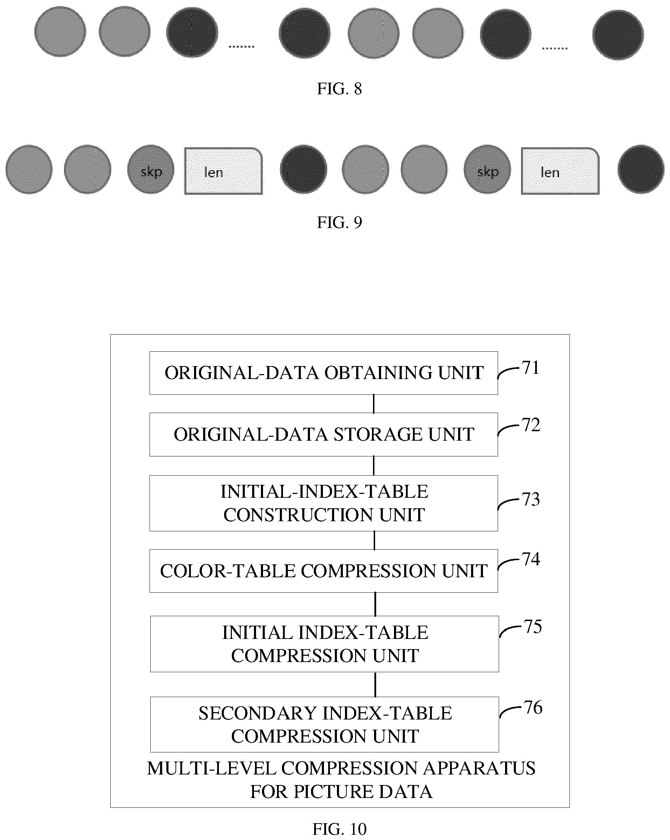

Referring to FIG. 8 and FIG. 9, FIG. 8 is a schematic diagram illustrating data arrangement of a first compressed index table provided in embodiments of the disclosure; FIG. 9 is a schematic diagram illustrating data arrangement of a second compressed index table provided in embodiments of the disclosure. In FIG. 8 and FIG. 9, gray circles represent any *N* different data or continuous and identical data whose value less than a preset value, black circles represent *N* continuous and identical data, the *"skp"* in the gray circle represents a locator *skp,* and the *"len"* in a trapezoid represents the length. In embodiments of the disclosure, data of the first compressed index table in FIG. 8 is converted into data shown in FIG. 9.

In embodiments of the disclosure, the original data is obtained by obtaining the picture to-be-compressed and performing modulo operation on the picture to-be-compressed; the first storage amount is obtained by storing the original data in the first container and calculating the size of the data in the first container, and the second storage amount is obtained by storing the original data in the second container and calculating the size of the data in the second container; the bit length of the index data is determined according to the first storage amount and the second storage amount, and the color table and the initial index table are constructed; the target color table is obtained by identifying a minimum value in the color table and subtracting the minimum value from each data in the color table for compression of the color table; the first compressed index table is obtained by performing compression on the initial index table according to the bit length of the index data; and the second compressed index table is obtained by identifying a locator in the first compressed index table and performing compression on the first compressed index table according to the locator. In the embodiments of the disclosure, picture data is stored in two containers respectively, the bit length of the index data is determined, the color table is compressed, and the index table is compressed twice, which can avoid data loss during picture compression, thereby achieving lossless compression of picture data and improving accuracy of picture data compression. Furthermore, in the disclosure, no external memory chip is needed or a memory chip with a relatively small capacity is used, which can reduce the cost of the device; there is no external memory chip that occupies additional physical space in some cases, and thus, the space of the device can be reduced; the storage space of the main control chip can be saved, which is conducive to software expansion.

Referring to FIG. 10, as an implementation of the method illustrated in FIG. 1, the disclosure provides a multi-level compression apparatus for picture data. Apparatus embodiments correspond to method embodiments illustrated in FIG. 1. The apparatus can be applied to various electronic devices.

As illustrated in FIG. 10, the multi-level compression apparatus for picture data of these embodiments includes an original-data obtaining unit 71, an original-data storage unit 72, an initial-index-table construction unit 73, a color-table compression unit 74, an initial index-table compression unit 75, and a secondary index-table compression unit 76. The original-data obtaining unit 71 is configured to obtain original data by obtaining a picture to-be-compressed and performing modulo operation on the picture to-be-compressed. The original-data storage unit 72 is configured to obtain a first storage amount by storing the original data in a first container and calculating a size of data in the first container, and obtain a second storage amount by storing the original data in a second container and calculating a size of data in the second container. The initial-index-table construction unit 73 is configured to determine a bit length of index data according to the first storage amount and the second storage amount, and construct a color table and an initial index table. The color-table compression unit 74 is configured to obtain a target color table by identifying a minimum value in the color table and subtracting the minimum value from each data in the color table for compression of the color table. The initial index-table compression unit 75 is configured to obtain a first compressed index table by performing compression on the initial index table according to the bit length of the index data. The secondary index-table compression unit 76 is configured to obtain a second compressed index table by identifying a locator in the first compressed index table and performing compression on the first compressed index table according to the locator.

Further, the original-data storage unit 72 includes a first storage unit and a second storage unit. The first storage unit is configured to obtain the first storage amount by storing the original data in a form of double bytes in the first container and calculating the size of the data in the first container through byte statistics. The second storage unit is configured to obtain the second storage amount by storing the original data in a form of four bytes in the second container and calculating the size of the data in the second container through byte statistics.

Further, the initial-index-table construction unit 73 includes a bit-length determining unit, a target-container determining unit, and a color-table construction unit. The bit-length determining unit is configured to determine a smallest size among the first storage amount and the second storage amount as a target value, and determine the target value as the bit length of the index data. The target-container determining unit is configured to determine a container corresponding to the target value as a target container, and determine a data type of the target container as a target type. The color-table construction unit is configured to construct the color table and the initial index table according to the target container and the target type.

Further, the color-table construction unit includes a color-table generation unit, a data-type conversion unit, and an index replacement unit. The color-table generation unit is configured to construct the color table with data in the target container. The data-type conversion unit is configured to obtain converted original data by converting a data type of the original data to the target type. The index replacement unit is configured to construct the initial index table by replacing data among the converted original data which is the same as data in the color table with a corresponding index in the color table.

Further, the color-table compression unit 74 includes an offset determining unit, a first-condition judgment unit, a target color-table generation unit, and a preset-data-type generation unit. The offset determining unit is configured to identify the minimum value in the color table and determine the minimum value as an offset. The first-condition judgment unit is configured to determine whether each data in the color table satisfies a first preset condition. The target color-table generation unit is configured to obtain the target color table by subtracting the offset from each data in the color table for compression of the color table, in response to the first preset condition being satisfied. The preset-data-type generation unit is configured to convert a data type of the target color table to a preset data type.

Further, the initial index-table compression unit 75 includes a bit-number determining unit, a valid-data generation unit, and an initial-index-table compression unit. The bit-number determining unit is configured to determine the number of bits according to the bit length of the index data and a second preset condition. The valid-data generation unit is configured to determine valid data and unused data in the initial index table according to the number of bits. The initial-index-table compression unit is configured to obtain the first compressed index table by synthesizing new data by shifting adjacent data in the unused data for compression of the initial index table.

Further, the secondary index-table compression unit 76 includes a locator determining unit, a data insertion unit, and a first-compressed-index-table compression unit. The locator determining unit is configured to search for *skp* data within any *Tx* data range in the first compressed index table, and determine the *skp* data as the locator in response to no *skp* data being found or a frequency of appearance of the *skp* data being the lowest. The data insertion unit is configured to traverse the first compressed index table, and insert a preset amount of data after data equal to the locator in response to the data equal to the locator existing in the first compressed index table. The first-compressed-index-table compression unit is configured to obtain the second compressed index table by replacing continuous and identical data in a preset replacement mode for compression of the first compressed index table, in response to the continuous and identical data existing in the first compressed index table.

In embodiments of the disclosure, the original data is obtained by obtaining the picture to-be-compressed and performing modulo operation on the picture to-be-compressed; the first storage amount is obtained by storing the original data in the first container and calculating the size of the data in the first container, and the second storage amount is obtained by storing the original data in the second container and calculating the size of the data in the second container; the bit length of the index data is determined according to the first storage amount and the second storage amount, and the color table and the initial index table are constructed; the target color table is obtained by identifying a minimum value in the color table and subtracting the minimum value from each data in the color table for compression of the color table; the first compressed index table is obtained by performing compression on the initial index table according to the bit length of the index data; and the second compressed index table is obtained by identifying a locator in the first compressed index table and performing compression on the first compressed index table according to the locator. In the embodiments of the disclosure, picture data is stored in two containers respectively, the bit length of the index data is determined, the color table is compressed, and the index table is compressed twice, which can avoid data loss during picture compression, thereby achieving lossless compression of picture data and improving accuracy of picture data compression. Furthermore, in the disclosure, no external memory chip is needed or a memory chip with a relatively small capacity is used, which can reduce the cost of the device; there is no external memory chip that occupies additional physical space in some cases, and thus, the space of the device can be reduced; the storage space of the main control chip can be saved, which is conducive to software expansion.

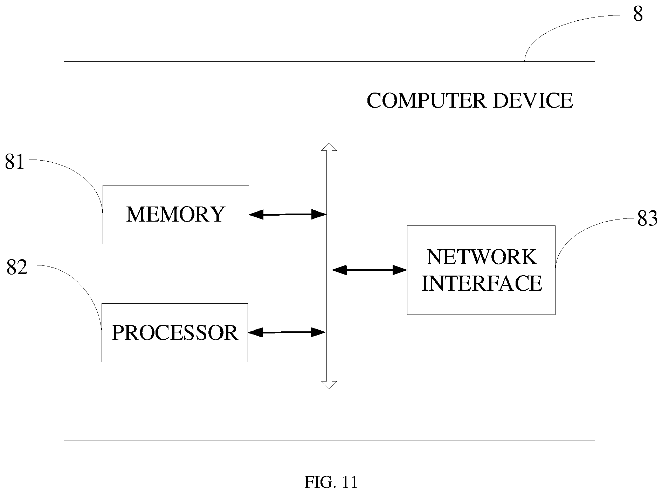

In order to solve the above technical problems, embodiments of the disclosure further provide a computer device. Referring to FIG. 11, FIG. 11 is a block diagram illustrating a basic structure of the computer device of these embodiments.

A computer device 8 includes a memory 81, a processor 82, and a network interface 83 that communicate with each other through a system bus. It should be noted that, this figure merely illustrates an exemplary computer device 8, where the computer device 8 includes three components: the memory 81, the processor 82, and the network interface 83. However, it should be understood that, implementation of all components shown is not required; alternatively, the computer device 8 has more or fewer components than shown. Those skilled in the art can understand that, the computer device herein may be a device that can automatically perform numerical calculations and/or information processing according to preset or pre-stored instructions. The hardware of the computer device 8 includes, but is not limited to, a microprocessor, an application specific integrated circuit (ASIC), a field-programmable gate array (FPGA), a digital signal processor (DSP), an embedded device, etc.

The computer device may be a computing device such as a desktop computer, a laptop, a handheld computer, and a cloud server. The computer device can interact with a user through a keyboard, a mouse, remote control, a touch pad, or voice-activated device.

The memory 81 includes at least one type of readable storage medium. The readable storage medium includes a flash memory, a hard disk, a multimedia card, a card-type memory (e.g., SD or DX memory), a random-access memory (RAM), a static RAM (SRAM), a read-only memory (ROM), an electrically erasable programmable ROM (EEPROM), a programmable ROM (PROM), a magnetic memory, a magnetic disk, an optical disk, etc. In some embodiments, the memory 81 may be an internal storage unit of the computer device 8, such as a hard disk or memory of the computer device 8. In other embodiments, the memory 81 may also be an external storage device of the computer device 8, such as a plug-in hard disk, a smart media card (SMC), or a secure digital (SD) device, a flash card, and so on equipped on the computer device 8. Also, the memory 81 may include both the internal storage unit and the external storage device of the computer device 8. In these embodiments, the memory 81 is generally used to store the operating system and various application software installed on the computer device 8, such as program codes for the multi-level compression method for picture data. In addition, the memory 81 is further used to temporarily store various types of data that has been outputted or is to be outputted.

In some embodiments, the processor 82 is a central processing unit (CPU), a controller, a microcontroller, a microprocessor, or other data processing chips. The processor 82 is generally configured to control the overall operations of the computer device 8. In these embodiments, the processor 82 is configured to run program codes or process data stored in the memory 81, for example, run program codes corresponding to the above multi-level compression method for picture data, to implement various embodiments of the multi-level compression method for picture data.

The network interface 83 may include a wireless network interface or a wired network interface. The network interface 83 is generally used to establish a communication connection between the computer device 8 and other electronic devices.

Other embodiments of the disclosure further provide a non-transitory computer-readable storage medium. The non-transitory computer-readable storage medium stores computer programs which, when executed by at least one processor, are operable with the at least one processor to execute the operations of the above multi-level compression method for picture data.

Through description of the above embodiments, those skilled in the art can clearly understand that, the foregoing method embodiments can be implemented by means of software and a necessary general hardware platform, or can also be implemented by hardware, but in many cases the former is better. Based on this understanding, the technical solutions of the disclosure essentially, or part of the technical solutions that contributes to the related art, may be embodied in the form of a software product. The computer software product is stored in a storage medium (e.g., a ROM/RAM, a disk, or a CD), and the storage medium includes multiple instructions to cause a terminal device (which may be a mobile phone, a computer, a server, an air conditioner, or a network device, etc.) to execute the method of the foregoing various embodiments of the disclosure.

Obviously, the foregoing embodiments are merely some embodiments of the disclosure, rather than all embodiments of the disclosure. The accompanying drawings illustrate exemplary implementations of the disclosure, but these exemplary implementations do not limit the protection scope of the disclosure. The disclosure can be implemented in many different forms; rather, these embodiments are provided to provide a thorough and comprehensive understanding of contents of the disclosure.

## Claims

1. A multi-level compression method for picture data, performed by a server and comprising:
obtaining (S1) original data by obtaining a picture to-be-compressed and performing modulo operation on the picture to-be-compressed;
obtaining (S2) a first storage amount by storing the original data in a first container and calculating a size of data in the first container, and obtaining (S2) a second storage amount by storing the original data in a second container and calculating a size of data in the second container;
determining (S3) a bit length of index data according to the first storage amount and the second storage amount, and constructing (S3) a color table and an initial index table;
obtaining (S4) a target color table by identifying a minimum value in the color table and subtracting the minimum value from each data in the color table for compression of the color table;
obtaining (S5) a first compressed index table by performing compression on the initial index table according to the bit length of the index data; and
obtaining (S6) a second compressed index table by identifying a locator in the first compressed index table and performing compression on the first compressed index table according to the locator.

2. The method of claim 1, wherein obtaining the first storage amount by storing the original data in the first container and calculating the size of the data in the first container and obtaining the second storage amount by storing the original data in the second container and calculating the size of the data in the second container comprise:
obtaining (S21) the first storage amount by storing the original data in a form of double bytes in the first container and calculating the size of the data in the first container through byte statistics; and
obtaining (S22) the second storage amount by storing the original data in a form of four bytes in the second container and calculating the size of the data in the second container through byte statistics.

3. The method of claim 1 or 2, wherein determining the bit length of the index data according to the first storage amount and the second storage amount and constructing the color table and the initial index table comprise:
determining (S31) a smallest size among the first storage amount and the second storage amount as a target value, and determining the target value as the bit length of the index data;
determining (S32) a container corresponding to the target value as a target container, and determining a data type of the target container as a target type; and
constructing (S33) the color table and the initial index table according to the target container and the target type.

4. The method of claim 3, wherein constructing the color table and the initial index table according to the target container and the target type comprises:
constructing (S331) the color table with data in the target container;
obtaining (S332) converted original data by converting a data type of the original data to the target type; and
constructing (S333) the initial index table by replacing data among the converted original data which is the same as data in the color table with a corresponding index in the color table.

5. The method of any of claims 1 to 4, wherein obtaining the target color table by identifying the minimum value in the color table and subtracting the minimum value from each data in the color table for compression of the color table comprises:
identifying (S41) the minimum value in the color table and determining (S41) the minimum value as an offset;
determining (S42) whether each data in the color table satisfies a first preset condition;
obtaining (S43) the target color table by subtracting the offset from each data in the color table for compression of the color table, in response to the first preset condition being satisfied; and
converting (S44) a data type of the target color table to a preset data type.

6. The method of any of claims 1 to 5, wherein obtaining the first compressed index table by performing compression on the initial index table according to the bit length of the index data comprises:
determining (S51) the number of bits according to the bit length of the index data and a second preset condition;
determining (S52) valid data and unused data in the initial index table according to the number of bits; and
obtaining (S53) the first compressed index table by synthesizing new data by shifting adjacent data in the unused data for compression of the initial index table.

7. The method of any of claims 1 to 6, wherein obtaining the second compressed index table by identifying the locator in the first compressed index table and performing compression on the first compressed index table according to the locator comprises:
searching (S61) for *skp* data within any *Tx* data range in the first compressed index table, and determining (S61) the *skp* data as the locator in response to no *skp* data being found or a frequency of appearance of the *skp* data being the lowest;
traversing (S62) the first compressed index table, and inserting (S62) a preset amount of data after data equal to the locator in response to the data equal to the locator existing in the first compressed index table; and
obtaining (S63) the second compressed index table by replacing continuous and identical data in a preset replacement mode for compression of the first compressed index table, in response to the continuous and identical data existing in the first compressed index table.

8. A computer device (8), comprising:
a processor (82); and
a memory (81), coupled with the processor and storing computer programs;
the computer programs, when executed by the processor, are operable to execute the method of any of claims 1 to 7.

9. A non-transitory computer-readable storage medium, storing computer programs which, when executed by a processor, cause the processor to execute the method of any of claims 1 to 7.
